(19) **European Patent Office**

Europäisches Patentamt
European Patent Office
Office européen des brevets

(11) **EP 3 966 688 B1**

(12) **FASCICULE DE BREVET EUROPEEN**

(45) Date de publication et mention
de la délivrance du brevet:
**27.08.2025 Bulletin 2025/35**

(21) Numéro de dépôt: **20723420.4**

(22) Date de dépôt: **07.05.2020**

(51) Classification Internationale des Brevets (IPC):
**G06F 9/48** *(2006.01)* **G06F 11/36** *(2025.01)*

(52) Classification Coopérative des Brevets (CPC):
**G06F 9/4881; G06F 11/3604**

(86) Numéro de dépôt international:
**PCT/EP2020/062767**

(87) Numéro de publication internationale:
**WO 2020/229312 (19.11.2020 Gazette 2020/47)**

(54) **PROCÉDÉ D'ÉVALUATION D'UN TEMPS MAXIMAL DE RÉPONSE D'UNE TÂCHE À ANALYSER**

VERFAHREN ZUR AUSWERTUNG EINER MAXIMALEN ANTWORTZEIT EINER ZU
ANALYSIERENDEN AUFGABE

METHOD FOR EVALUATING A MAXIMUM RESPONSE TIME OF A TASK TO BE ANALYSED

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.05.2019 FR 1904869**

(43) Date de publication de la demande:
**16.03.2022 Bulletin 2022/11**

(73) Titulaire: **THALES**
**92400 Courbevoie (FR)**

(72) Inventeurs:
• **HENIA, Rafik**
**91767 PALAISEAU CEDEX (FR)**
• **RIOUX, Laurent**
**91767 PALAISEAU CEDEX (FR)**
• **SORDON, Nicolas**
**91767 PALAISEAU CEDEX (FR)**

(74) Mandataire: **Lavoix**
**2, place d'Estienne d'Orves**
**75441 Paris Cedex 09 (FR)**

(56) Documents cités:
**FR-A1- 3 069 678**

• **JOHANNES SCHLATOW ET AL: "Response-Time
Analysis for Task Chains with Complex
Precedence and Blocking Relations", ACM
TRANSACTIONS ON EMBEDDED COMPUTING
SYSTEMS., vol. 16, no. 5s, 27 September 2017
(2017-09-27), US, pages 1 - 19, XP055680569,
ISSN: 1539-9087, DOI: 10.1145/3126505**
• **RAFIK HENIA ET AL: "Integrating Formal Timing
Analysis in the Real-Time Software Development
Process", PROCEEDINGS OF THE 2015
WORKSHOP ON CHALLENGES IN
PERFORMANCE METHODS FOR SOFTWARE
DEVELOPMENT, WOSP '15, 1 January 2015
(2015-01-01), New York, New York, USA, pages 35
- 40, XP055466852, ISBN: 978-1-4503-3340-5,
DOI: 10.1145/2693561.2693562**

**Description**

La présente invention concerne un procédé d'évaluation d'un temps maximal de réponse d'une tâche à analyser sur un bloc matériel. La présente invention se rapporte également à un produit programme d'ordinateur associé.

Dans le domaine de l'avionique, les temps de réponse des systèmes de pilotage d'un aéronef doivent être garantis de manière stricte pour éviter la survenue d'accidents. Par exemple, un changement de trajectoire ou une opération d'atterrissage non achevés dans des délais impartis sont susceptibles d'endommager l'aéronef et de mettre en danger les passagers.

De ce fait, pour assurer le respect des temps de réponse, des systèmes temps-réel sont embarqués dans les aéronefs. Les systèmes temps-réel sont des systèmes informatiques se différenciant des autres systèmes informatiques par la prise en compte de contraintes temporelles dont le respect est aussi important que l'exactitude du résultat délivré par le système.

Lors de la conception de systèmes temps-réel, l'un des enjeux consiste dès lors à prédire précisément les caractéristiques temporelles de tels systèmes et notamment le temps de réponse des tâches des systèmes sur les blocs matériels des systèmes. Les blocs matériels sont des éléments d'architecture remplissant une fonction prédéterminée. Les tâches sont des séquences d'instructions exécutables sur les blocs matériels. Dans le cas des aéronefs, les tâches sont, par exemple, relatives à des commandes de changement de trajectoire ou d'atterrissage de l'aéronef.

Des techniques d'analyse existent pour mener une vérification temporelle à partir de descriptions adaptées du logiciel et du système concerné. De telles techniques visent à déterminer le temps maximal de réponse (ou de traitement) de la tâche analysée. On connaît par exemple le document FR 3 069 678 qui propose de déterminer le pire temps de réponse d'une tâche en fonction du pire temps de réponse d'un ensemble de tâches différentes et de prendre en compte pour cela, les dépendance entre les différentes tâches.

Néanmoins, de telles techniques ne sont pas adaptées à tous les modèles de tâches existants. En outre, les temps de réponse obtenus à partir de telles techniques ne sont pas toujours fiables.

Il existe donc un besoin pour un procédé fiable d'évaluation d'un temps maximal de réponse d'une tâche à analyser.

A cet effet, l'invention a pour objet un procédé d'évaluation d'un temps maximal de réponse d'une tâche à analyser sur un bloc matériel, la tâche à analyser appartenant à un ensemble de tâches, chaque tâche de l'ensemble de tâches étant activable à une pluralité d'instants, chaque tâche ayant un numéro prédéterminé définissant un ordre de priorité relativement aux autres tâches, le bloc matériel étant propre à exécuter chacune des tâches suivant un ensemble de règles, au moins une première règle stipulant que les tâches sont exécutées selon l'ordre de priorité, le procédé étant mis en œuvre par un calculateur et comprenant les étapes de :

- détermination d'un scénario d'ordonnancement des tâches de l'ensemble de tâches maximisant le temps de réponse de la tâche à analyser, le scénario d'ordonnancement définissant des instants d'activation de tâches de l'ensemble de tâches, dites tâches ordonnancées,
- détermination d'un intervalle de temps, dit période active pire cas, durant lequel le bloc matériel exécute les tâches ordonnancées selon le scénario d'ordonnancement déterminé,
- détermination d'un temps maximal de réponse de chacune des activations possibles de la tâche à analyser durant la période active pire cas, et
- détermination du temps maximal de réponse de la tâche à analyser en fonction du temps maximal de réponse de chacune des activations possibles de la tâche à analyser durant la période active pire cas.

Suivant des modes de mise en œuvre particuliers, le procédé d'évaluation comprend une ou plusieurs des caractéristiques suivantes, prises isolément ou suivant toutes les combinaisons techniquement possibles :

- les tâches ordonnancées sont les tâches de priorité supérieure ou égale à la priorité de la tâche à analyser, ainsi que la tâche à analyser ;
- chaque tâche de l'ensemble de tâches a un nombre maximal d'activations possibles de la tâche dans un intervalle de temps glissant, l'intervalle de temps glissant présentant une durée propre à la tâche, le scénario d'ordonnancement stipulant que toutes les tâches ordonnancées sont activées de sorte que le nombre maximal d'activations de chaque tâche ordonnancée ait lieu :

  - simultanément à l'instant de la première activation de la tâche à analyser, et
  - simultanément à chaque instant égal à la somme de l'instant de la première activation de la tâche à analyser et de chaque multiple de la durée de l'intervalle de temps glissant de la tâche ordonnancée ;

- chaque tâche de l'ensemble de tâches a un temps d'exécution maximal durant lequel la tâche s'exécute sans l'interférence d'autres tâches, le scénario d'ordonnancement stipulant que toutes les tâches sont exécutées selon le temps d'exécution maximal de chaque tâche ordonnancée ;

- la période active pire cas est déterminée en fonction d'un nombre d'activations de chaque tâche ordonnancée ;
- chaque tâche de l'ensemble de tâches a un temps d'exécution maximal durant lequel la tâche s'exécute de manière effective, la période active pire cas étant la somme des produits du nombre d'activations de chaque tâche ordonnancée par le temps d'exécution maximal de la tâche ordonnancée ;
- l'étape de détermination du temps maximal de réponse de chacune des activations de la tâche à analyser comprend le calcul, pour chaque activation, d'une durée, dite durée intermédiaire, entre le début de la période active pire cas et la fin de l'exécution de l'activation considérée, le temps maximal de réponse de l'activation considérée étant obtenu en fonction de la durée intermédiaire ;
- le temps maximal de réponse de chaque activation de la tâche à analyser est égal à la différence entre la durée intermédiaire et la durée entre l'instant de début de la période active pire cas et l'instant d'activation de l'activation considérée ;
- le temps maximal de réponse de la tâche à analyser est le maximum des temps maximal de réponse des activations de la tâche à analyser dans la période active pire cas.

L'invention concerne également un produit programme d'ordinateur comportant des instructions logicielles, les instructions logicielles mettant en œuvre le procédé d'évaluation tel que décrit précédemment, lorsque les instructions logicielles sont exécutées par un calculateur.

D'autres caractéristiques et avantages de l'invention apparaîtront à la lecture de la description qui suit de modes de réalisation de l'invention, donnée à titre d'exemple uniquement et en référence aux dessins qui sont :

- [Fig 1] figure 1, une vue schématique d'un calculateur et d'un produit programme d'ordinateur, et
- [Fig 2] figure 2, un ordinogramme d'un exemple de mise en œuvre d'un procédé d'évaluation d'un temps maximal de réponse d'une tâche à analyser.

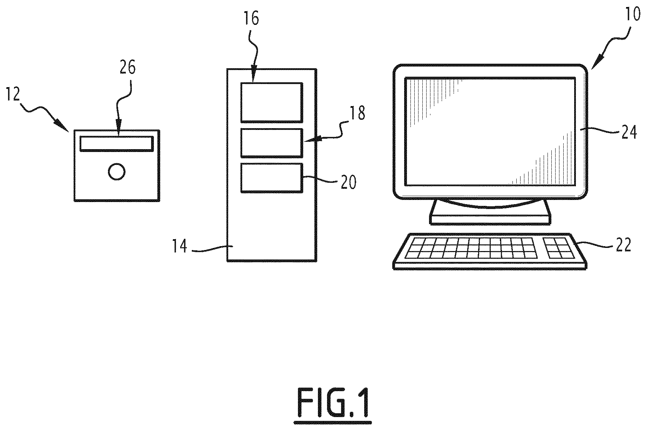

Un calculateur 10 et un produit programme d'ordinateur 12 sont illustrés par la figure 1.

Le calculateur 10, est de préférence, un ordinateur.

Plus généralement, le calculateur 10 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission et de mémorisation.

Le calculateur est en interaction avec le produit programme d'ordinateur 12.

Comme illustré par la figure 1, le calculateur 10 comporte un processeur 14 comprenant une unité de traitement de données 16, des mémoires 18 et un lecteur 20 de support d'informations. Le calculateur 10 comprend, optionnellement, un clavier 22 et une unité d'affichage 24.

Le produit programme d'ordinateur 12 comporte un support d'informations 26.

Le support d'information 26 est un support lisible par le calculateur 10, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en œuvre d'un procédé d'évaluation d'un temps maximal de réponse d'une tâche à analyser lorsque le programme d'ordinateur 12 est mis en œuvre sur l'unité de traitement 16 du calculateur 10.

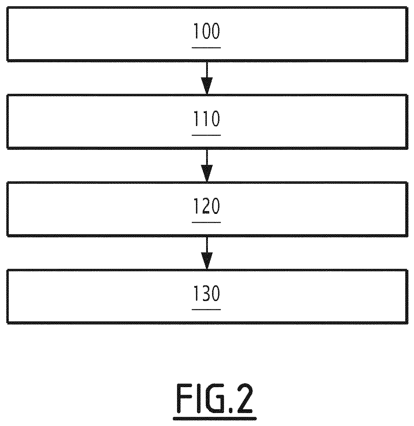

Le fonctionnement du calculateur 10 en interaction avec le produit programme d'ordinateur 12 va maintenant être décrit en référence à la figure 2, qui illustre schématiquement un exemple de mise en œuvre d'un procédé d'évaluation d'un temps maximal de réponse d'une tâche à analyser.

Le procédé d'évaluation est un procédé configuré pour évaluer un temps maximal de réponse $R_a$ d'une tâche à analyser $T_a$ sur un bloc matériel $B_i$.

La tâche à analyser $T_a$ appartient à un ensemble de tâches $T_a$, $T_i$.

Chaque tâche $T_a$, $T_i$ est une fonction transformant au moins une entrée en au moins un résultat de sortie. La fonction est une séquence d'instructions activable, par exemple, par la réception de paramètres d'activation en entrée et propre à générer des résultats lors de sa mise en œuvre sur un système physique, tel que les blocs matériels d'une architecture. Les séquences d'instructions sont, par exemple, relatives à des commandes d'un équipement spécialisé, tel qu'un aéronef. Dans ce cas, les commandes sont, par exemple, des commandes de changement de trajectoire ou d'atterrissage de l'aéronef ou encore des commandes de vol ou de traitement d'images en temps réel.

Chaque tâche $T_a$, $T_i$ de l'ensemble de tâches $T_a$, $T_i$ est activable à une pluralité d'instants. Par exemple, les tâches $T_a$, $T_i$ sont activées de manière périodique ou sporadique. Une tâche activée de manière périodique est une tâche activée à des instants réguliers (périodiques), par exemple, par des capteurs météorologiques ou des capteurs de vitesse. Une tâche activée de manière sporadique est une tâche activée en réponse à des évènements non périodiques, comme par exemple une action effectuée par le pilote d'un aéronef. Par exemple, de tels événements ont lieu de temps en temps, tels que des changements de conditions météorologiques (pluie, tempête, trou d'air) ou encore des commandes spécifiques de l'utilisateur, telle qu'une commande de changement de cap.

Le présent procédé est particulièrement adapté pour être appliqué à des tâches activées de manière sporadique en présence de tâches de priorité supérieure ou égale. De telles tâches ont une activation qui est, par exemple, définie par un nombre maximal d'occurrences durant une fenêtre temporelle donnée. Dans un exemple, une tâche activée de manière sporadique peut être exécutée au plus cinq fois dans une fenêtre de temps de 100 ms. Cela signifie que pour toute fenêtre de 100 ms dans l'axe du temps, le nombre d'activations de cette tâche dans cette fenêtre sera toujours compris entre 0 et 5.

Le temps maximal de réponse $R_a$ de la tâche à analyser $T_a$ est la durée maximale entre l'instant d'activation de la tâche $T_a$ et l'instant de fin d'exécution de la tâche $T_a$. En d'autres termes, le temps maximal de réponse $R_a$ de la tâche $T_a$ est la durée pour laquelle les interférences des autres tâches $T_a$, $T_i$ de l'ensemble de tâches $T_a$, $T_i$ sont maximales, ce qui retarde l'exécution complète de la tâche à analyser $T_a$. Dans la description, il est fait une différence entre l'instant d'activation d'une tâche et l'instant de début d'exécution de la tâche. En effet, lorsqu'une tâche s'active, elle ne va pas forcément commencer à s'exécuter, car elle peut être bloquée par l'exécution d'une tâche de priorité supérieure. Ainsi, l'activation d'une tâche est l'instant auquel l'instance de la tâche demande à s'exécuter.

Chaque tâche $T_a$, $T_i$ présente :

- un numéro prédéterminé $P_a$, $P_i$ définissant un ordre de priorité relativement aux autres tâches $T_a$, $T_i$,
- un nombre maximal $N_a$, $N_i$ d'activations possibles de la tâche $T_a$, $T_i$ dans un intervalle de temps glissant, l'intervalle de temps glissant présentant une durée $W_a$, $W_i$ propre à la tâche $T_a$, $T_i$, et
- un temps d'exécution maximal $C_a$, $C_i$ durant lequel la tâche $T_a$, $T_i$ s'exécute de manière effective, c'est-à-dire sans l'interférence d'autres tâches $T_a$, $T_i$ de l'ensemble de tâches $T_a$, $T_i$.

Dans un exemple de mise en œuvre, chaque tâche $T_a$, $T_i$ comprend, également, une échéance qui correspond au délai maximum depuis l'activation de la tâche $T_a$, $T_i$ avant lequel la tâche $T_a$, $T_i$ doit avoir été exécutée sans quoi la tâche $T_a$, $T_i$ est dite non-ordonnançable.

Le bloc matériel $B_i$ est également appelé cœur de traitement.

Le bloc matériel $B_i$ est propre à exécuter chacune des tâches $T_a$, $T_i$ suivant un ensemble de règles. Au moins une première règle stipule que les tâches $T_a$, $T_i$ sont exécutées selon l'ordre de priorité.

Avantageusement, au moins une deuxième règle stipule que, lorsqu'une tâche $T_a$, $T_i$ de priorité strictement supérieure à une tâche $T_a$, $T_i$ en cours d'exécution est activée, le bloc matériel $B_i$ interrompt la tâche $T_a$, $T_i$ en cours d'exécution pour exécuter la tâche $T_a$, $T_i$ de priorité supérieure. En d'autres termes, le bloc matériel $B_i$ autorise les préemptions entre tâches.

Le procédé d'évaluation comprend une étape 100 de détermination d'un scénario d'ordonnancement des tâches $T_a$, $T_i$ de l'ensemble de tâches $T_a$, $T_i$ maximisant le temps de réponse de la tâche à analyser $T_a$. Le scénario d'ordonnancement permet, ainsi, de calculer le « plus long temps » ou « pire temps » de réponse de la tâche à analyser $T_a$ sur le bloc matériel $B_i$, c'est-à-dire le temps de réponse obtenu lorsque les événements les plus chronophages se produisent.

Le scénario d'ordonnancement définit des instants d'activation de tâches $T_a$, $T_i$ de l'ensemble de tâches $T_a$, $T_i$, dites tâches ordonnancées $T_a$, $T_i$. Les tâches ordonnancées $T_a$, $T_i$ sont les tâches $T_i$ de priorité supérieure ou égale à la priorité de la tâche à analyser $T_a$, ainsi que la tâche $T_a$ à analyser.

Dans un exemple de mise en œuvre, le scénario d'ordonnancement stipule que toutes les tâches ordonnancées $T_a$, $T_i$ sont activées de sorte que le nombre maximal d'activation $N_a$, $N_i$ de chaque tâche ordonnancée $T_a$, $T_i$ ait lieu :

- simultanément à l'instant de la première activation de la tâche à analyser $T_a$, et
- simultanément à chaque instant égal à la somme de l'instant de la première activation de la tâche à analyser $T_a$ et de chaque multiple de la durée $W_a$, $W_i$ de l'intervalle de temps glissant de la tâche ordonnancée $T_a$, $T_i$ considérée.

Ainsi, la contribution maximale d'une tâche $T_i$, de priorité supérieure ou égale à celle de la tâche à analyser $T_a$, à la période active pire cas $BP_a$ de la tâche à analyser $T_a$ a lieu lorsque $N_i$ activations de la tâche $T_i$ arrivent simultanément à l'instant $t_a$ et que par la suite, $N_i$ activations de la tâche $T_i$ arrivent simultanément après chaque temps $W_i$.

L'instant d'activation $t_{i,k}$ de chaque instance $T_{i,k}$ de la tâche $T_i$ est donné par la formule (1) suivante :

$$t_{i,k} = t_a + \left(\left\lceil \frac{k}{N_i} \right\rceil - 1\right) * W_i \qquad (1)$$

Où:

- $t_a$ est l'instant qui marque le début dans le temps de la période active pire cas $BP_a$ de la tâche à analyser $T_a$. $t_a$ est aussi appelé « instant critique » de la tâche à analyser $T_a$. Une période active de la tâche à analyser $T_a$ est dite période active pire cas si la tâche à analyser $T_a$ y subit une interférence maximale de la part de taches de priorités supérieures ou égales.
- k désigne la k-ième instance de la tâche $T_i$, k étant un entier naturel supérieur ou égal à un,
- $N_i$ désigne le nombre maximal d'activations possibles de la tâche $T_i$ dans l'intervalle de temps glissant de durée $W_i$ propre à la tâche $T_i$, et
- $\lceil X \rceil$ désigne la partie entière supérieure de X.

Puisque les tâches $T_a$, $T_i$ de l'ensemble de tâches $T_a$, $T_i$ présentent un nombre borné d'activations sur un intervalle temporel glissant dans le temps, il n'est pas possible d'activer plus de $N_i$ instances de $T_i$ aux instants d'activation $t_a$, $t_a+W_i$, etc.

Avantageusement, le scénario d'ordonnancement stipule, également, que toutes les tâches ordonnancées $T_a$, $T_i$ sont exécutées selon le temps d'exécution maximal $C_a$, $C_i$ de chaque tâche ordonnancée $T_a$, $T_i$.

Le procédé d'évaluation comprend une étape 110 de détermination d'un intervalle de temps, dit période active pire cas $BP_a$, durant lequel le bloc matériel $B_i$ exécute les tâches ordonnancées $T_a$, $T_i$ selon le scénario d'ordonnancement déterminé.

Il est à noter que juste avant le début et après la fin de chaque période active, le processeur est soit au repos, soit en train d'exécuter des tâches $T_i$ de priorités inférieures à celle de la tâche à analyser $T_a$. En supposant que le bloc matériel $B_i$ est chargé à moins de 100 % (condition pour l'ordonnançabilté des tâches sur le bloc matériel $B_i$) une telle période active existe.

La durée de la période active pire cas $BP_a$ est déterminée en fonction du nombre d'activations (nombre d'instances) de chaque tâche ordonnancée $T_a$, $T_i$ sur la période active pire cas $BP_a$. Plus précisément, la période active pire cas $BP_a$ est la somme des produits du nombre d'activations de chaque tâche ordonnancée $T_a$, $T_i$ par le temps d'exécution maximal $C_a$, $C_i$ de la tâche ordonnancée $T_a$, $T_i$.

La durée de la période active pire cas $BP_a$ est, par exemple, donnée par la formule (2) suivante :

$$BP_a = \sum_{P_i \geq \in P_a} \left\lceil \frac{BP_a}{W_i} \right\rceil * N_i * C_i \qquad (2)$$

Où:

- $P_i$ désigne le numéro prédéterminé de la tâche $T_i$,
- $P_a$ désigne le numéro prédéterminé de la tâche $T_a$, et
- $C_i$ désigne le temps d'exécution maximal de la tâche $T_i$.

Afin de résoudre la formule (2) précédente, le premier calcul de la période active pire cas $BP_a$ est effectué en prenant une valeur initiale $BP_a = C_a$ dans le terme de droite de la formule (2). Cela signifie que la période active pire cas $BP_a$ ne peut pas avoir une longueur inférieure à la valeur prédéterminée $C_a$. La période active pire cas $BP_a$ est ensuite recalculée à partir de la valeur obtenue précédemment, jusqu'à atteindre un point fixe. Une fois le point fixe atteint, cela signifie que la valeur de la période active pire cas $BP_a$ ne vas plus changer et qu'aucune nouvelle instance de tâche de priorité supérieure ou égale à la priorité de la tâche à analyser $T_a$ ne va s'ajouter dans la période active pire cas $BP_a$. Le point fixe est atteint car le bloc matériel $B_i$ est chargé à moins de 100 %.

L'étape de détermination 110 comprend aussi la détermination d'un nombre maximum d'activations possibles de la tâche à analyser $T_a$ durant la période active pire cas $BP_a$. Le nombre maximum d'activations k de la tâche à analyser $T_a$ dans la période active pire cas $BP_a$ est, avantageusement, donné par la formule (3) suivante :

$$k = \left\lceil \frac{BP_a}{W_a} \right\rceil * N_a \qquad (3)$$

Où:

- $N_a$ désigne le nombre maximal d'activations possibles de la tâche à analyser $T_a$ dans l'intervalle de temps glissant de durée $W_a$ propre à la tâche à analyser $T_a$.

Le procédé d'évaluation comprend une étape 120 de détermination d'un temps maximal de réponse $R_{a,q}$ de chacune des activations possibles de la tâche à analyser $T_a$ durant la période active pire cas $BP_a$.

L'étape de détermination 120 comprend le calcul d'une durée intermédiaire $BP_a(q)$, pour chaque activation (ou instance) de la tâche à analyser $T_a$ dans la période active pire cas $BP_a$. La durée intermédiaire $BP_a(q)$ est la durée entre le début de la période active pire cas $BP_a$ et la fin de l'exécution de l'activation considérée.

La durée intermédiaire $BP_a(q)$ de chaque activation (ou instance) q de la tâche à analyser $T_a$ est, par exemple, obtenue à partir de la formule (4) suivante :

$$BP_a(q) = C_a * q + \sum_{T_i \in hp_a} \left\lceil \frac{BP_a}{W_i} \right\rceil * N_i * C_i \qquad (4)$$

Où:

- q désigne la q-ième instance de la tâche à analyser $T_a$, q étant un entier naturel supérieur ou égal à un et inférieur ou égal à k, k étant le nombre maximal d'activations de la tâche à analyser $T_a$ dans la période active pire cas $BP_a$,
- $C_a$ désigne le temps d'exécution maximal de la tâche à analyser $T_a$, et
- $hp_a$ désigne la liste des tâches de priorités supérieures ou égales à celle de la tâche à analyser $T_a$.

Afin de résoudre la formule (4), le premier calcul de la durée intermédiaire $BP_a(q)$ est effectué en prenant une valeur initiale $BP_a(q) = C_a$ dans le terme de droite de la formule (4). La durée intermédiaire $BP_a(q)$ est ensuite recalculée à partir de la valeur obtenue précédemment, jusqu'à atteindre un point fixe. Une fois le point fixe atteint, cela signifie que la valeur de la durée intermédiaire $BP_a(q)$ ne va plus changer.

L'étape de détermination 120 comprend, ensuite, le calcul du temps maximal de réponse $R_{a,q}$ de chaque activation (ou instance) de la tâche à analyser $T_a$. Le temps maximal de réponse $R_{a,q}$ de chaque activation de la tâche à analyser $T_a$ est la durée maximale entre l'instant d'activation de l'instance et l'instant de fin d'exécution de l'instance. En d'autres termes, le temps maximal de réponse $R_{a,q}$ de chaque instance de la tâche $T_a$ est la durée pour laquelle les interférences des autres tâches $T_a$, $T_i$ de l'ensemble de tâches $T_a$, $T_i$ sont maximales, ce qui retarde l'exécution complète de l'instance de la tâche à analyser $T_a$.

Le temps maximal de réponse $R_{a,q}$ de chaque instance, aussi appelé temps maximal intermédiaire, est égal à la différence entre la durée intermédiaire $BP_a(q)$ et la durée entre l'instant de début de la période active pire cas $BP_a$ et l'instant d'activation de l'instance considérée.

Le temps maximal de réponse $R_{a,q}$ de chaque activation est, par exemple, obtenu à partir de la formule (5) suivante :

$$R_{a,q} = BP_a(q) - \left( \left\lceil \frac{q}{N_a} \right\rceil - 1 \right) * W_a \qquad (5)$$

Où :

- le terme $\left( \left\lceil \frac{q}{N_a} \right\rceil - 1 \right) * W_a$ permet de calculer le temps entre le début de la période active pire cas $BP_a$ de la tâche à analyser $T_a$ et l'arrivée de l'instance q de la tâche à analyser $T_a$.

Le procédé d'évaluation comprend une étape 130 de détermination du temps maximal de réponse $R_a$ de la tâche à analyser $T_a$ en fonction du temps maximal de réponse $R_{a,q}$ de chacune des activations possibles de la tâche à analyser $T_a$ durant la période active pire cas $BP_a$.

Le temps maximal de réponse $R_a$ de la tâche à analyser $T_a$ est le maximum des temps maximal de réponse $R_{a,q}$ des activations de la tâche à analyser $T_a$ dans la période active pire cas $BP_a$. Par exemple, si la tâche à analyser comprend trois activations possibles durant la période active pire cas $BP_a$, trois temps maximal de réponse $R_{a,q}$ sont obtenus (un par activation). Le temps maximal de réponse $R_a$ de la tâche à analyser $T_a$ (aussi appelé temps global de réponse) est le maximum de ces trois temps maximal de réponse $R_{a,q}$.

Ainsi, le procédé d'évaluation permet de déterminer pour la tâche à analyser $T_a$, le temps maximal d'interférence

des tâches $T_i$ de priorités supérieures ou égales durant l'exécution de la tâche à analyser $T_a$. L'étape de détermination du scénario d'ordonnancement permet de déterminer le scénario pire cas que pourrait subir la tâche à analyser $T_a$ (interférences maximum avec les autres tâches de l'ensemble de tâches). Les étapes suivantes de détermination permettent, sur la base du scénario d'ordonnancement pire cas déterminé, de calculer le temps maximal de réponse (pire cas) de la tâche à analyser $T_a$.

Etant donné que le procédé d'évaluation se base sur des preuves et des démonstrations, il contribue à faciliter la procédure de certification à laquelle sont soumis les systèmes avioniques critiques. De plus, par le fait que les calculs effectués lors de ce procédé sont exacts, un tel procédé permet d'éviter de surestimer les temps de réponse pire cas, ce qui a pour avantage d'éviter de sur-dimensionner les ressources matérielles. En effet, lorsque le temps maximal de réponse calculé est surestimé, des ressources matérielles plus performantes, et donc plus coûteuses, sont utilisées pour permettre de satisfaire les temps de réponse, et ce alors qu'en réalité un processeur moins performant et donc beaucoup moins coûteux aurait suffi.

Ainsi, le procédé d'évaluation permet d'évaluer de manière fiable le temps maximal de réponse d'une tâche à analyser. En particulier, le temps maximal de réponse obtenu n'est pas surestimé. Une telle tâche à analyser est, par exemple, relative à la commande d'équipements spécialisés tels que des aéronefs.

**Revendications**

1. Procédé d'évaluation d'un temps maximal de réponse ($R_a$) d'une tâche à analyser ($T_a$) sur un bloc matériel ($B_i$), la tâche à analyser ($T_a$) appartenant à un ensemble de tâches ($T_a$, $T_i$),

   chaque tâche ($T_a$, $T_i$) de l'ensemble de tâches ($T_a$, $T_i$) étant activable à une pluralité d'instants, chaque tâche ($T_a$, $T_i$) ayant un numéro prédéterminé ($P_a$, $P_i$) définissant un ordre de priorité relativement aux autres tâches ($T_a$, $T_i$), le bloc matériel ($B_i$) étant propre à exécuter chacune des tâches ($T_a$, $T_i$) suivant un ensemble de règles, au moins une première règle stipulant que les tâches ($T_a$, $T_i$) sont exécutées selon l'ordre de priorité,

   le procédé étant mis en œuvre par un calculateur et comprenant les étapes de :

   - détermination d'un scénario d'ordonnancement des tâches ($T_a$, $T_i$) de l'ensemble de tâches ($T_a$, $T_i$) maximisant le temps de réponse de la tâche à analyser ($T_a$), le scénario d'ordonnancement définissant des instants d'activation de tâches ($T_a$, $T_i$) de l'ensemble de tâches ($T_a$, $T_i$), dites tâches ordonnancées ($T_a$, $T_i$),
   - détermination d'un intervalle de temps, dit période active pire cas ($BP_a$), durant lequel le bloc matériel ($B_i$) exécute les tâches ordonnancées ($T_a$, $T_i$) selon le scénario d'ordonnancement déterminé,
   - détermination d'un temps maximal de réponse ($R_{a,q}$) de chacune des activations possibles de la tâche à analyser ($T_a$) durant la période active pire cas ($BP_a$), et
   - détermination du temps maximal de réponse ($R_a$) de la tâche à analyser ($T_a$) en fonction du temps maximal de réponse ($R_{a,q}$) de chacune des activations possibles de la tâche à analyser ($T_a$) durant la période active pire cas ($BP_a$).

2. Procédé d'évaluation selon la revendication 1, dans lequel les tâches ordonnancées ($T_a$, $T_i$) sont les tâches ($T_i$) de priorité supérieure ou égale à la priorité de la tâche à analyser ($T_a$), ainsi que la tâche ($T_a$) à analyser.

3. Procédé d'évaluation selon la revendication 1 ou 2, dans lequel chaque tâche ($T_a$, $T_i$) de l'ensemble de tâches ($T_a$, $T_i$) a un nombre maximal ($N_a$, $N_i$) d'activations possibles de la tâche ($T_a$, $T_i$) dans un intervalle de temps glissant, l'intervalle de temps glissant présentant une durée ($W_a$, $W_i$) propre à la tâche ($T_a$, $T_i$), le scénario d'ordonnancement stipulant que toutes les tâches ordonnancées ($T_a$, $T_i$) sont activées de sorte que le nombre maximal d'activations ($N_a$, $N_i$) de chaque tâche ordonnancée ($T_a$, $T_i$) ait lieu :

   - simultanément à l'instant de la première activation de la tâche à analyser ($T_a$), et
   - simultanément à chaque instant égal à la somme de l'instant de la première activation de la tâche à analyser ($T_a$) et de chaque multiple de la durée ($W_a$, $W_i$) de l'intervalle de temps glissant de la tâche ordonnancée ($T_a$, $T_i$).

4. Procédé d'évaluation selon l'une quelconque des revendications 1 à 3, dans lequel chaque tâche ($T_a$, $T_i$) de l'ensemble de tâches ($T_a$, $T_i$) a un temps d'exécution maximal ($C_a$, $C_i$) durant lequel la tâche ($T_a$, $T_i$) s'exécute sans l'interférence d'autres tâches ($T_a$, $T_i$), le scénario d'ordonnancement stipulant que toutes les tâches ordonnancées ($T_a$, $T_i$) sont exécutées selon le temps d'exécution maximal ($C_a$, $C_i$) de chaque tâche ordonnancée ($T_a$, $T_i$).

**5.** Procédé d'évaluation selon l'une quelconque des revendications 1 à 4, dans lequel la période active pire cas (BP$_a$) est déterminée en fonction d'un nombre d'activations de chaque tâche ordonnancée (T$_a$, T$_i$).

**6.** Procédé d'évaluation selon la revendication 5, dans lequel chaque tâche (T$_a$, T$_i$) de l'ensemble de tâches (T$_a$, T$_i$) a un temps d'exécution maximal (C$_a$, C$_i$) durant lequel la tâche (T$_a$, T$_i$) s'exécute de manière effective, la période active pire cas (BP$_a$) étant la somme des produits du nombre d'activations de chaque tâche ordonnancée (T$_a$, T$_i$) par le temps d'exécution maximal (C$_a$, C$_i$) de la tâche ordonnancée (T$_a$, T$_i$).

**7.** Procédé d'évaluation selon l'une quelconque des revendications 1 à 6, dans lequel l'étape de détermination du temps maximal de réponse (R$_{a,q}$) de chacune des activations de la tâche à analyser (T$_a$) comprend le calcul, pour chaque activation, d'une durée, dite durée intermédiaire (BP$_a$(q)), entre le début de la période active pire cas (BP$_a$) et la fin de l'exécution de l'activation considérée, le temps maximal de réponse (R$_{a,q}$) de l'activation considérée étant obtenu en fonction de la durée intermédiaire (BP$_a$(q)).

**8.** Procédé d'évaluation selon la revendication 7, dans lequel le temps maximal de réponse (R$_{a,q}$) de chaque activation de la tâche à analyser (T$_a$) est égal à la différence entre la durée intermédiaire (BP$_a$(q)) et la durée entre l'instant de début de la période active pire cas (BP$_a$) et l'instant d'activation de l'activation considérée.

**9.** Procédé d'évaluation selon l'une quelconque des revendications 1 à 8, dans lequel le temps maximal de réponse (R$_a$) de la tâche à analyser (T$_a$) est le maximum des temps maximal de réponse (R$_{a,q}$) des activations de la tâche à analyser (T$_a$) dans la période active pire cas (BP$_a$).

**10.** Produit programme d'ordinateur comportant des instructions logicielles, les instructions logicielles mettant en œuvre le procédé d'évaluation selon l'une quelconque des revendications 1 à 9, lorsque les instructions logicielles sont exécutées par un calculateur.

**Patentansprüche**

**1.** Verfahren zur Auswertung einer maximalen Antwortzeit (R$_a$) einer zu analysierenden Aufgabe (T$_a$) an einem Hardwareblock (B$_i$), wobei die zu analysierende Aufgabe (t$_a$) zu einem Satz von Aufgaben (T$_a$, T$_i$) gehört,

jede Aufgabe (T$_a$, T$_i$) des Satzes von Aufgaben (T$_a$, T$_i$) zu einer Vielzahl von Zeitpunkten aktivierbar ist, jede Aufgabe (T$_a$, T$_i$) eine vorbestimmte Nummer (P$_a$, P$_i$) aufweist, die eine Prioritätsreihenfolge in Bezug auf die anderen Aufgaben (T$_a$,T$_i$) definiert,
der Hardwareblock (B$_i$) geeignet ist, um jede der Aufgaben (T$_a$, T$_i$) gemäß einem Satz von Regeln auszuführen, wobei mindestens eine erste Regel besagt, dass die Aufgaben (T$_a$, T$_i$) gemäß der Prioritätsreihenfolge ausgeführt werden,

wobei das Verfahren von einem Rechner implementiert wird und die folgenden Schritte umfasst:

- Bestimmen eines Planungsszenarios von Aufgaben (T$_a$, T$_i$) aus dem Satz von Aufgaben (T$_a$, T$_i$), die die Antwortzeit der zu analysierenden Aufgabe maximiert (T$_a$), das Scheduling-Szenario, das Zeitpunkte für die Aktivierung von Aufgaben definiert (T$_a$, T$_i$) aus dem Satz von Aufgaben (T$_a$, T$_i$), die sogenannten geplanten Aufgaben (T$_a$, T$_i$),
- Bestimmen eines Zeitintervalls, der sogenannten aktiven Worst-Case-Periode (BP$_a$), in dem der Hardwareblock (B$_i$) die geplanten Aufgaben (T$_a$, T$_i$) gemäß dem ermittelten Planungsszenario ausführt,
- Bestimmen einer maximalen Antwortzeit (R$_{a,q}$) jeder der möglichen Aktivierungen der zu analysierenden Aufgabe (T$_a$) während der aktiven Worst-Case-Periode (BP$_a$), und
- Bestimmen der maximalen Antwortzeit (R$_a$) der zu analysierenden Aufgabe (T$_a$) abhängig von der maximalen Antwortzeit (R$_{a,q}$) jeder der möglichen Aktivierungen der zu analysierenden Aufgabe (T$_a$) während der aktiven Worst-Case-Periode (BP$_a$).

**2.** Auswertungsverfahren nach Anspruch 1, wobei die geplanten Aufgaben (T$_a$,T$_i$) die Aufgaben (T$_i$) sind, die eine höhere oder gleiche Priorität wie die Priorität der zu analysierenden Aufgabe (T$_a$) aufweisen, sowie die zu analysierende Aufgabe (T$_a$).

**3.** Auswertungsverfahren nach Anspruch 1 oder 2, wobei jede Aufgabe (T$_a$, T$_i$) des Satzes von Aufgaben (T$_a$, T$_i$) eine

maximale Anzahl ($N_a$, $N_i$) von möglichen Aktivierungen der Aufgabe ($T_a$, $T_i$) in einem gleitenden Zeitintervall aufweist, wobei das gleitende Zeitintervall eine Dauer ($W_a$, $W_i$) aufweist, die für die Aufgabe ($T_a$, $T_i$) spezifisch ist, wobei das Planungsszenario festlegt, dass alle geplanten Aufgaben ($T_a$, $T_i$) aktiviert werden, sodass die maximale Anzahl von Aktivierungen ($N_a$, $N_i$) jeder geplanten Aufgabe ($T_a$, $T_i$) wie folgt stattfindet:

- gleichzeitig zum Zeitpunkt der ersten Aktivierung der zu analysierenden Aufgabe ($T_a$), und
- gleichzeitig zu jedem Zeitpunkt, der gleich wie die Summe aus dem Zeitpunkt der ersten Aktivierung der zu analysierenden Aufgabe ($T_a$) und jedem Vielfachen der Dauer ($W_a$, $W_i$) des gleitenden Zeitintervalls der geplanten Aufgabe ($T_a$, $T_i$) ist.

4. Auswertungsverfahren nach einem der Ansprüche 1 bis 3, wobei jede Aufgabe ($T_a$, $T_i$) des Satzes von Aufgaben ($T_a$, $T_i$) eine maximale Ausführungszeit ($C_a$, $C_i$) aufweist, während der die Aufgabe ($T_a$, $T_i$) ohne Störung durch andere Aufgaben ($T_a$, $T_i$) ausgeführt wird, wobei das Planungsszenario festlegt, dass alle geplanten Aufgaben ($T_a$, $T_i$) gemäß der maximalen Ausführungszeit ($C_a$, $C_i$) jeder geplanten Aufgabe ($T_a$, $T_i$) ausgeführt werden.

5. Auswertungsverfahren nach einem der Ansprüche 1 bis 4, wobei die aktive Worst-Case-Periode ($BP_a$) abhängig von einer Anzahl von Aktivierungen jeder geplanten Aufgabe ($T_a$, $T_i$) bestimmt wird.

6. Auswertungsverfahren nach Anspruch 5, wobei jede Aufgabe ($T_a$, $T_i$) des Satzes von Aufgaben ($T_a$, $T_i$) eine maximale Ausführungszeit ($C_a$, $C_i$) aufweist, während der die Aufgabe ($T_a$, $T_i$) effektiv ausgeführt wird, wobei die aktive Worst-Case-Periode ($BP_a$) die Summe der Produkte aus der Anzahl der Aktivierungen jeder geplanten Aufgabe ($T_a$, $T_i$) und der maximalen Ausführungszeit ($C_a$, $C_i$) der geplanten Aufgabe ($T_a$, $T_i$) ist.

7. Auswertungsverfahren nach einem der Ansprüche 1 bis 6, wobei der Schritt zum Bestimmen der maximalen Antwortzeit ($R_{a,q}$) jeder der Aktivierungen der zu analysierenden Aufgabe ($T_a$) ein Berechnen einer Dauer, der sogenannten Zwischendauer ($BP_a(q)$), für jede Aktivierung zwischen dem Beginn der aktiven Worst-Case-Periode ($BP_a$) und dem Ende der Ausführung der betrachteten Aktivierung umfasst, wobei die maximale Antwortzeit ($R_{a,q}$) der betrachteten Aktivierung abhängig von der Zwischendauer ($BP_a(q)$) erlangt wird.

8. Auswertungsverfahren nach Anspruch 7, wobei die maximale Antwortzeit ($R_{a,q}$) jeder Aktivierung der zu analysierenden Aufgabe ($T_a$) gleich wie die Differenz zwischen der Zwischendauer ($BP_a(q)$) und der Dauer zwischen dem Startzeitpunkt der aktiven Worst-Case-Periode ($BP_a$) und dem Aktivierungszeitpunkt der betrachteten Aktivierung ist.

9. Auswertungsverfahren nach einem der Ansprüche 1 bis 8, wobei die maximale Antwortzeit ($R_a$) der zu analysierenden Aufgabe ($T_a$) das Maximum der maximalen Antwortzeiten ($R_{a,q}$) der Aktivierungen der zu analysierenden Aufgabe ($T_a$) in der aktiven Worst-Case-Periode ($BP_a$) ist.

10. Rechnerprogrammprodukt, umfassend Softwareanweisungen, wobei die Softwareanweisungen das Auswertungsverfahren nach einem der Ansprüche 1 bis 9 implementieren, wenn die Softwareanweisungen von einem Rechner ausgeführt werden.

**Claims**

1. Method for evaluating a maximum response time ($R_a$) of a task to be analysed ($T_a$) on a hardware unit ($B_i$), the task to be analysed ($T_a$) belonging to a set of tasks ($T_a$, $T_i$),

   each task ($T_a$, $T_i$) of the set of tasks ($T_a$, $T_i$) being activatable at a plurality of instants,
   each task ($T_a$, $T_i$) having a predetermined number ($P_a$, $P_i$) defining an order of priority relative to the other tasks ($T_a$, $T_i$),
   the hardware unit ($B_i$) being suitable for executing each of the tasks ($T_a$, $T_i$) according to a set of rules, at least a first rule stipulating that the tasks ($T_a$, $T_i$) are executed according to the order of priority,

   the method being implemented by a computer and comprising the steps of:

   - determining a task scheduling scenario ($T_a$, $T_i$) from the set of tasks ($T_a$, $T_i$) that maximises the response time of the task to be analysed ($T_a$), the scheduling scenario defining task activation times ($T_a$, $T_i$) of the set of tasks ($T_a$, $T_i$), known as scheduled tasks ($T_a$, $T_i$),

- determining a time interval, known as the active worst-case period ($BP_a$), during which the hardware unit ($B_i$) executes the scheduled tasks ($T_a$, $T_i$) according to the scheduling scenario determined,
- determining a maximum response time ($R_{a,q}$) for each of the possible activations of the task to be analysed ($T_a$) during the active worst-case period ($BP_a$), and
- determination of the maximum response time ($R_a$) of the task to be analysed ($T_a$) as a function of the maximum response time ($R_{a,q}$) of each of the possible activations of the task to be analysed ($T_a$) during the active worst-case period ($BP_a$).

2. The evaluation method according to claim 1, wherein the scheduled tasks ($T_a$, $T_i$) are the tasks ($T_i$) with a priority greater than or equal to the priority of the task to be analysed ($T_a$), as well as the task ($T_a$) to be analysed.

3. The evaluation method according to claim 1 or 2, wherein each task ($T_a$, $T_i$) of the set of tasks ($T_a$, $T_i$) has a maximum number ($N_a$, $N_i$) of possible activations of the task ($T_a$, $T_i$) within a sliding time interval, the sliding time interval having a duration ($W_a$, $W_i$) specific to the task ($T_a$, $T_i$), the scheduling scenario stipulating that all scheduled tasks ($T_a$, $T_i$) are activated so that the maximum number of activations ($N_a$, $N_i$) of each scheduled task ($T_a$, $T_i$) takes place:

   - simultaneously at the time of the first activation of the task to be analysed ($T_a$), and
   - simultaneously at each instant equal to the sum of the instant of the first activation of the task to be analysed ($T_a$) and each multiple of the duration ($W_a$, $W_i$) of the sliding time interval of the scheduled task ($T_a$, $T_i$).

4. The evaluation method according to any one of claims 1 to 3, wherein each task ($T_a$, $T_i$) of the set of tasks ($T_a$, $T_i$) has a maximum execution time ($C_a$, $C_i$) during which the task ($T_a$, $T_i$) executes without interference from other tasks ($T_a$, $T_i$), the scheduling scenario stipulating that all scheduled tasks ($T_a$, $T_i$) are executed according to the maximum execution time ($C_a$, $C_i$) of each scheduled task ($T_a$, $T_i$).

5. The evaluation method according to any one of claims 1 to 4, wherein the worst-case active period ($BP_a$) is determined as a function of a number of activations of each scheduled task ($T_a$, $T_i$).

6. The evaluation method according to claim 5, wherein each task ($T_a$, $T_i$) of the set of tasks ($T_a$, $T_i$) has a maximum execution time ($C_a$, $C_i$) during which the task ($T_a$, $T_i$) is effectively executed, the worst-case active period ($BP_a$) being the sum of the products of the number of activations of each scheduled task ($T_a$, $T_i$) by the maximum execution time ($C_a$, $C_i$) of the scheduled task ($T_a$, $T_j$).

7. The evaluation method according to any one of claims 1 to 6, wherein the step of determining the maximum response time ($R_{a,q}$) of each of the activations of the task to be analysed ($T_a$) comprises the calculation, for each activation, of a duration, known as the intermediate duration ($BP_a(q)$), between the start of the worst-case active period ($BP_a$) and the end of the execution of the activation in question, the maximum response time ($R_{a,q}$) of the activation in question being obtained as a function of the intermediate duration ($BP_a(q)$).

8. The evaluation method according to claim 7, wherein the maximum response time ($R_{a,q}$) of each activation of the task to be analysed ($T_a$) is equal to the difference between the intermediate duration ($BP_a(q)$) and the duration between the start time of the worst-case active period ($BP_a$) and the activation time of the activation in question.

9. The evaluation method according to any one of claims 1 to 8, wherein the maximum response time ($R_a$) of the task to be analysed ($T_a$) is the maximum of the maximum response times ($R_{a,q}$) of the activations of the task to be analysed ($T_a$) in the worst-case active period ($BP_a$).

10. A computer program product comprising software instructions, the software instructions implementing the evaluation method according to any one of claims 1 to 9, when the software instructions are executed by a computer.

FIG.1

$$\underline{100}$$

$$\underline{110}$$

$$\underline{120}$$

$$\underline{130}$$

## FIG.2

## RÉFÉRENCES CITÉES DANS LA DESCRIPTION

**Documents brevets cités dans la description**

- FR 3069678